# EUROPEAN PATENT APPLICATION

(11) **EP 4 790 777 A1**
(43) Date of publication of application: **12.08.2026**
(21) Application number: 25864601.7
(22) Date of filing: 09.07.2025
(51) Int. Cl.: H01M 10/04, H01M 10/0585, B65H 35/00

(54) **ELECTRODE ASSEMBLY AND APPARATUS FOR MANUFACTURING ELECTRODE ASSEMBLY**

(30) Priority: 19.12.2024 KR 20240191524
(71) Applicant: LG ENERGY SOLUTION, LTD., Seoul 07335 (KR)
(72) Inventor: KIM, Kee Bum, Yuseong-gu, Daejeon 34122 (KR); OH, Min U, Yuseong-gu, Daejeon 34122 (KR); LEE, Ju Won, Yuseong-gu, Daejeon 34122 (KR); LEE, Seong Jin, Yuseong-gu, Daejeon 34122 (KR)
(74) Representative: Goddar, Heinz J.
(86) International application number: PCT/KR2025/009974
(87) International publication number: WO 2026/134497

(57) **Abstract**

The present disclosure relates to an electrode assembly including electrodes and separators, and an apparatus for manufacturing such an electrode assembly. An electrode assembly according to an embodiment of the present disclosure may include a first separator; a first electrode having one surface in contact with the first separator; a second separator having one surface in contact with the other surface of the first electrode; a second electrode having a different polarity from the first electrode and having one surface in contact with the other surface of the second separator; and a plurality of attachment tapes attached to the first separator, the first electrode, the second separator, and the second electrode to combine them together, wherein the first and second separators may have wider widths than the first and second electrodes, wherein widthwise edges of the first and second separators may include adhesive portions that are bonded to each other and non-adhesive portions that are not bonded to each other, and wherein the non-adhesive portions may not overlap the plurality of attachment tapes.

## Description

### TECHNICAL FIELD

### CROSS-REFERENCE TO RELATED APPLICATIONS

The present application is based on and claims priority from Korean Patent Application No. 10-2024-0191524, filed on December 19, 2024, with the Korean Intellectual Property Office, the disclosure of which is incorporated herein in its entirety by reference.

### TECHNICAL FIELD

The present disclosure relates to an electrode assembly including electrodes and separators, and an apparatus for manufacturing such an electrode assembly.

### BACKGROUND ART

A secondary battery is a battery that can be repeatedly charged and discharged, and may have a structure in which an electrode assembly and electrolyte are accommodated in a sealed space inside an exterior material. The electrode assembly has a shape in which a plurality of electrodes and separators are alternately stacked, and a fixing member capable of fixing them may be attached to the outer surface of the electrode assembly.

The above electrode assembly structure is disclosed in the prior patent document KR 10-1820442 B1. FIG. 2 of KR 10-1820442 B1 illustrates a structure in which an attachment tape 43 is attached to the outer surface of an electrode assembly where electrodes 10, 20 and separators 30 are alternately stacked. In particular, the separators 30 are formed to be wider than the electrodes 10, 20, and thus the widthwise edge portions of the separators 30 are folded. At this time, the widthwise ends of the electrodes 10, 20 are wrapped by a pair of adjacent separators 30, so that the corresponding portions are not exposed to the electrolyte.

In a secondary battery, it is important for the electrodes to be sufficiently impregnated with the electrolyte within a short period of time, and if the electrolyte wetting property is poor, the electrolyte cannot reach the active material particles on the electrode surface, which impedes ion movement, thereby reducing current. Additionally, if the electrolyte wetting property is poor, the productivity of the secondary battery is lowered, and there is a need for improving the electrolyte wetting property to maintain the overall balance of secondary battery characteristics.

### DISCLOSURE

### TECHNICAL PROBLEM

The present disclosure is designed to solve the problems of the related art, and therefore the present disclosure is directed to providing an electrode assembly having improved electrolyte wetting property of an electrode interposed between separators, and an apparatus for manufacturing such an electrode assembly.

### TECHNICAL SOLUTION

An electrode assembly according to the present disclosure may include a first separator; a first electrode having one surface in contact with the first separator; a second separator having one surface in contact with the other surface of the first electrode; a second electrode having a different polarity from the first electrode and having one surface in contact with the other surface of the second separator; and a plurality of attachment tapes attached to the first separator, the first electrode, the second separator, and the second electrode to combine them together, wherein the first and second separators may have wider widths than the first and second electrodes, wherein widthwise edges of the first and second separators may include adhesive portions that are bonded to each other and non-adhesive portions that are not bonded to each other, and wherein the non-adhesive portions may not overlap the plurality of attachment tapes.

A plurality of non-adhesive portions may be formed between portions where a pair of neighboring attachment tapes are attached among the widthwise edges of the first and second separators.

The distance between the center lines of a pair of neighboring attachment tapes may be 100 mm to 120 mm.

Three non-adhesive portions may be formed between portions where a pair of neighboring attachment tapes are attached among the widthwise edges of the first and second separators.

Each of the non-adhesive portions may have a width of 2.5 mm to 3.5 mm.

The attachment tape may include a film made of PET material with an adhesive layer formed on one surface.

Meanwhile, an apparatus for manufacturing an electrode assembly according to the present disclosure may include a first supply unit that supplies a first material including a first separator in a sheet shape extending in one direction and a plurality of first electrodes seated on one surface of the first separator and spaced apart at a predetermined interval along the length direction of the first separator, to an adhesive stage where an adhesive process is performed; a second supply unit that supplies a second material including a second separator in a sheet shape extending in one direction and a plurality of second electrodes seated on one surface of the second separator and spaced apart at a predetermined interval along the length direction of the second separator, to the adhesive stage; an adhesive unit provided on the adhesive stage and bonding a portion of the mutually facing parts of the first separator and the second separator to form an adhesive portion on the first separator and the second separator; a cutting unit that cuts the first separator and the second separator along the center line of the adhesive portion to form a laminate in which the first separator, the first electrode, the second separator, and the second electrode are sequentially laminated; and a taping unit that attaches a plurality of tapes to the laminate so that the first separator, the first electrode, the second separator, and the second electrode constituting the laminate are combined, wherein the taping unit may attach the plurality of tapes to the laminate so that the non-adhesive portions of the first separator and the second separator that are not bonded to each other and the plurality of tapes do not overlap.

The second supply unit may supply the second material to the upper side of the first material so that the first material and the second material overlap each other in the adhesive stage.

The adhesive unit may include a cylindrical body that rotates by a motor; and a plurality of protrusions that protrude from the surface of the body and are spaced apart along the circumferential direction of the body.

The protrusions may include a first protrusion provided on one side of the body in the length direction; a second protrusion spaced apart from the first protrusion at a predetermined interval in the length direction of the body; and a third protrusion spaced apart from the second protrusion at a predetermined interval in the length direction of the body.

Each of the first to third protrusions may include a coupling plate coupled to the body; and a plurality of protruding tips that protrude from the coupling plate and are spaced apart at a predetermined interval along the length direction of the body.

The distance between the first protrusion and the second protrusion may be the same as the distance between the second protrusion and the third protrusion.

The distance between the first protrusion and the second protrusion may be the same as the distance between the neighboring protruding tips.

### ADVANTAGEOUS EFFECTS

According to an electrode assembly according to an embodiment of the present disclosure, only a portion of the widthwise edges of the first and second separators may be bonded to each other. That is, non-adhesive portions may be formed at the widthwise edges of the first and second separators. Since such non-adhesive portions do not overlap the attachment tape, the electrolyte may flow into the electrode through the non-adhesive portions, and thus there is an advantageous effect of improving the electrolyte wetting property of the electrode interposed between the first and second separators.

### DESCRIPTION OF DRAWINGS

FIG. 1 is a plan view of an electrode assembly according to an embodiment the present disclosure.
FIG. 2 is a cross-sectional view of the electrode assembly of FIG. 1 taken along line AA'.
FIG. 3 is a cross-sectional view of the electrode assembly of FIG. 1 taken along line BB'.
FIG. 4 is a view showing differences in electrolyte wetting property between electrode assemblies according to an embodiment of the present disclosure and comparative examples.
FIG. 5 is a view schematically illustrating an apparatus for manufacturing an electrode assembly according to an embodiment of the present disclosure.
FIG. 6 is a view for describing that an adhesive unit rolls to bond the first separator and the second separator.
FIG. 7 is a view for describing that non-adhesive portions and adhesive portions are formed on some of the first separator and the second separator as the adhesive unit rolls.
FIG. 8 is a perspective view of an adhesive unit.
FIG. 9 is a view for describing the structure of the first protrusion of the adhesive unit.
FIG. 10 is a view for describing the structure of the second protrusion of the adhesive unit.
FIG. 11 is a view for describing the structure of the third protrusion of the adhesive unit.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Electrode assembly

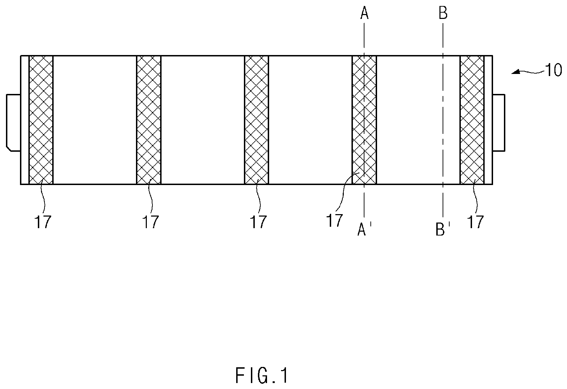

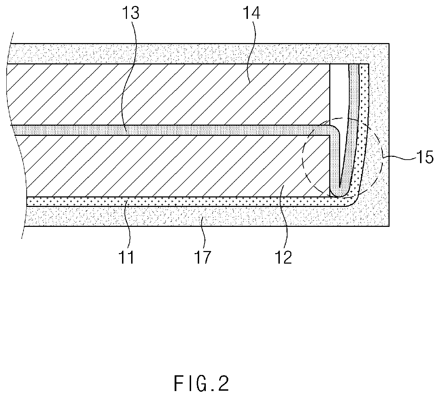

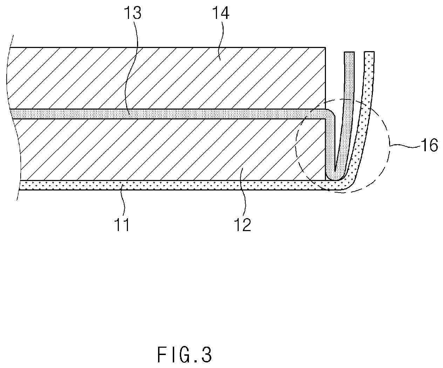

FIG. 1 is a plan view of an electrode assembly according to an embodiment the present disclosure. FIG. 2 is a cross-sectional view of the electrode assembly of FIG. 1 taken along line AA'. FIG. 3 is a cross-sectional view of the electrode assembly of FIG. 1 taken along line BB'.

Referring to FIGS. 1 to 3, an electrode assembly 10 according to the present disclosure may include a first separator 11; a first electrode 12 having one surface in contact with the first separator 11; a second separator 13 having one surface in contact with the other surface of the first electrode 12; a second electrode 14 having a different polarity from the first electrode 12 and having one surface in contact with the other surface of the second separator 13; and a plurality of attachment tapes 17 attached to the first separator 11, the first electrode 12, the second separator 13, and the second electrode 14 to combine them together.

At this time, the first and second separators 11, 13 may have wider widths than the first and second electrodes 12, 14, and the widthwise edge portions of the first and second separators 11, 13 may include adhesive portions 15 that are bonded to each other and non-adhesive portions 16 that are not bonded to each other. Additionally, the non-adhesive portions 16 may not overlap the plurality of attachment tapes 17.

In this case, since only a portion of the widthwise edges of the first and second separators 11, 13 are bonded to each other, non-adhesive portions 16 that are not bonded to each other may be formed at the widthwise edges of the first and second separators 11, 13. Such non-adhesive portions 16 do not overlap the attachment tape 17, and thus the electrolyte may flow into the first electrode 12 through the free volume between the non-adhesive portions 16. Therefore, in case of the electrode assembly 10 according to the present disclosure, there is an advantageous that effect the electrolyte wetting property of the electrode 12 interposed between the first and second separators 11, 13 is not impaired.

The first and second separators 11, 13 are films that are interposed between the electrodes 12, 14 to separate them, and may be made of an insulating material. For example, each of the first and second separators 11, 13 may be made of a polymer resin material such as polyethylene (PE) and polypropylene (PP).

The first and second electrodes 12, 14 have different polarities, wherein one of the first and second electrodes 12, 14 may be a positive electrode, and the other may be a negative electrode. At this time, the sizes and shapes of the positive electrode and the negative electrode may be formed in various ways. For example, both the positive electrode and the negative electrode may have a multilayer sheet structure in which an active material is coated on a metal substrate, and the negative electrode may have a larger cross-sectional area than the positive electrode.

The positive electrode includes a positive electrode current collector and a positive electrode active material coated on the positive electrode current collector, and a positive electrode uncoated portion of the positive electrode current collector that is not coated with the positive electrode active material may be a positive electrode tab. At this time, the positive electrode tab may be electrically connected to the positive electrode lead. Meanwhile, the negative electrode includes a negative electrode current collector and a negative electrode active material coated on the negative electrode current collector, and a negative electrode uncoated portion of the negative electrode current collector that is not coated with the negative electrode active material may be a negative electrode tab. At this time, the negative electrode tab may be electrically connected to the negative electrode lead.

The attachment tape 17 is configured to be attached to a laminate in which a first separator 11, a first electrode 12, a second separator 13, and a second electrode 14 are sequentially laminated and fix the positions of these 11, 12, 13, 14, and may be attached to various positions of the laminate. For example, the attachment tape 17 is a tape that winds the laminate in the width direction, and may be attached to the laminate in plurality.

In particular, the distance between the center lines of the plurality of attachment tapes 17 may be 100 mm to 120 mm. Additionally, the plurality of attachment tapes 17 may be attached to the laminate so as not to overlap the non-adhesive portion 16 to be described later.

Meanwhile, the attachment tape 17 may be made of various materials. For example, the attachment tape 17 may be a film made of PET material with an adhesive layer formed on one surface. When the attachment tape 17 is a film made of PET material, it has high electrical insulation property, and thus there is an advantageous effect of preventing the first and second electrodes 12, 14 from being electrically connected through the attachment tape 17.

The first and second separators 11, 13 have a long sheet shape, are each wound in a roll shape, and should be unwound by an unwinder before being coupled to the first and second electrodes 12, 14. After the sheet-like first separator 11 is unwound, the first electrode 12 may be seated on one surface of the first separator 11.

Additionally, after the sheet-like second separator 13 is unwound, the second electrode 13 may be seated on one surface of the second separator 13. Thereafter, a first material composed of the first separator 11 and the first electrode 12 and a second material composed of the second separator 13 and the second electrode 14 may be coupled to form a laminate. An attachment tape 17 may be attached to this laminate.

Meanwhile, the first and second separators 11, 13 may have wider cross-sectional areas than the first and second electrodes 12, 14. In particular, the first and second separators 11, 13 may have wider widths than the first and second electrodes 12, 14. When the first material and the second material described above are coupled to form a laminate, the widthwise edges of the first and second separators 11, 13 may be coupled to each other and folded to one side.

When the widthwise edges of the first and second separators 11, 13 are coupled and folded, both widthwise ends of the first electrode 12 interposed between the first and second separators 11, 13 may be wrapped by the first and second separators 11, 13. When the electrode assembly 10 is accommodated in the internal space of the secondary battery together with the electrolyte, both widthwise ends of the first electrode 12 do not directly contact the electrolyte, and thus the electrolyte wetting property of the first electrode 12 may be reduced.

In order to solve the above problem, in the electrode assembly 10 according to the present disclosure, only a portion of the widthwise edges of the first and second separators 11, 13 may be coupled and the rest may not be coupled. Specifically, both adhesive portions 15 that are bonded to each other and non-adhesive portions 16 that are not bonded to each other may be formed at the widthwise edges of the first and second separators 11, 13.

The adhesive portion 15 is a portion of the widthwise edges of the first and second separators 11, 13 that are bonded to each other, and may be formed by pressing a portion of the widthwise edges of the first and second separators 11, 13 by a high-temperature pressure member. That is, the adhesive portion 15 may be a portion of the widthwise edges of the first and second separators 11, 13 that are thermally fused to each other.

The non-adhesive portion 16 may be a portion of the widthwise edges of the first and second separators 11, 13 that are not bonded to each other. That is, while the adhesive portion 15 is pressed by a high-temperature pressure member and thermally fused, the non-adhesive portion 16 may be a portion that is not pressed. That is, unlike the adhesive portion 15, the non-adhesive portion 16 is not heated or pressed, and thus may have a relatively thicker thickness than the adhesive portion 15.

The widthwise edges of the first and second separators 11, 13 are folded while the adhesive portion 15 and the non-adhesive portion 16 are formed, and an attachment tape 17 may be attached thereto. Specifically, the widthwise edges of the first and second separators 11, 13 are folded to one side, and the attachment tape 17 may maintain the folded state of the widthwise edges of the first and second separators 11, 13.

In this case, the overall volume of the electrode assembly 10 is reduced, thereby improving energy density. In particular, since the non-adhesive portion 16 does not overlap the attachment tape 17, the attachment tape 17 may not press the non-adhesive portion 16. That is, the widthwise edges of the first and second separators 11, 13 are not bonded to each other at the non-adhesive portion 16, and the attachment tape 17 does not apply a pressing force thereto.

Therefore, a predetermined gap may be formed between the first and second separators 11, 13 constituting the non-adhesive portion 16, and when the electrode assembly 10 is accommodated in the internal space of the secondary battery together with the electrolyte, the electrolyte may flow into the interior through the gap. That is, the electrolyte may flow into the first electrode 12 interposed between the first and second separators 11, 13 through this gap, which may prevent the electrolyte wetting property of the first electrode 12 from being impaired.

Meanwhile, a plurality of non-adhesive portions 16 may be formed at the widthwise edges of the first and second separators 11, 13. In particular, a plurality of non-adhesive portions 16 may be formed between portions where a pair of neighboring attachment tapes 17 are attached among the widthwise edges of the first and second separators 11, 13. For example, three non-adhesive portions 16 may be formed between portions where a pair of neighboring attachment tapes 17 are attached among the widthwise edges of the first and second separators 11, 13.

Additionally, the number of non-adhesive portions 16 formed at the widthwise edges of the first and second separators 11, 13 and the width of each of the non-adhesive portions 16 may be formed in various ways depending on the standard of the electrode assembly 10. At this time, the widthwise length of the non-adhesive portion 16 may refer to the length of the non-adhesive portion 16 in the short side direction.

For example, the short side lengths of the first and second separators 11, 13 constituting the electrode assembly 10 may be 107 to 109 mm, the long side lengths of the first and second separators 11, 13 may be 540 to 550 mm, and a total of twelve non-adhesive portions 16 may be formed at the widthwise edges of the first and second separators 11, 13. At this time, the non-adhesive portion 16 may be formed to be 2.1 to 2.3 mm thicker than the adhesive portion 15.

At this time, a total of five attachment tapes 17 are attached to the electrode assembly 10 along the length direction, and the interval between the attachment tapes 17 may be 90 to 100 mm. In this case, three non-adhesive portions 16 are formed between portions where a pair of neighboring attachment tapes 17 are attached among the widthwise edges of the first and second separators 11, 13, and the width of each of the non-adhesive portions 16 may be 2.5 mm to 3.5 mm.

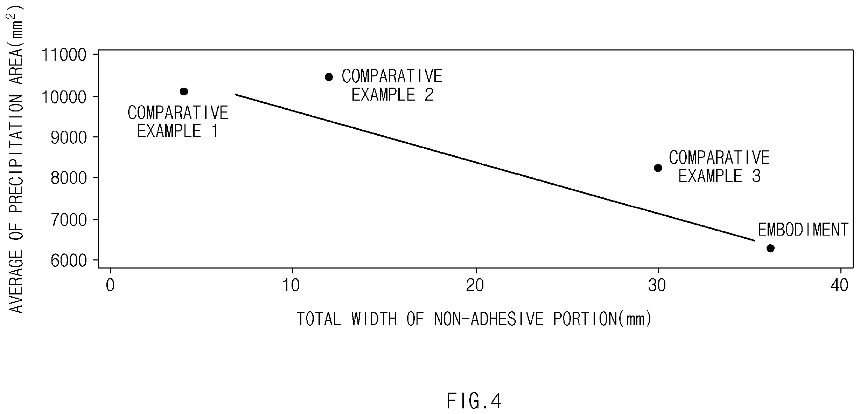

FIG. 4 is a view showing differences in electrolyte wetting property between electrode assemblies according to an embodiment of the present disclosure and comparative examples.

FIG. 4 illustrates the widths of the non-adhesive portions and the lithium-ion precipitation areas for each of Comparative Examples 1 to 3 and Embodiment. Comparative Examples 1 to 3 and Embodiment are intended to compare the length difference in the total width of the non-adhesive portion of the electrode assembly and the lithium-ion precipitation rate with respect to the formation position of the non-adhesive portion, wherein Comparative Examples 1 to 3 and Embodiment all have the same standard of electrode assembly, and are different only in the widthwise length of the non-adhesive portion formed at the edge portion of the separator and the formation position of the non-adhesive portion.

Specifically, in Comparative Examples 1 to 3 and Embodiment, the standards of the separators constituting the electrode assembly are all the same. In Comparative Examples 1 to 3 and Embodiment, the long side length of the separator constituting the electrode assembly is 545 mm, and the short side length of the separator is 108.5 mm. In Comparative Examples 1 to 3 and Embodiment, the non-adhesive portion is formed at the edge portion of the separator constituting the electrode assembly, and the non-adhesive portion may be formed 2.2 mm thinner than the adhesive portion.

In the case of Comparative Example 1, the total widthwise length of the non-adhesive portion formed at the edge portion of the separator is 4 mm. In the case of Comparative Example 3, the total widthwise length of the non-adhesive portion formed at the edge portion of the separator is 30 mm. In the case of Comparative Example 2, the total widthwise length of the non-adhesive portion formed at the edge portion of the separator is 12 mm. At this time, the non-adhesive portions of Comparative Examples 1 and 2 do not overlap the attachment tape, and some of the non-adhesive portion of Comparative Example 2 may overlap the attachment tape. That is, in Comparative Example 3, the portions of a pair of separators constituting the non-adhesive portion may be pressed toward each other by the attachment tape.

On the other hand, Embodiment is an example of an electrode assembly 10 according to the present disclosure, and the total widthwise length of the non-adhesive portion 16 formed at the edge portion of the separators 11, 13 is 36 mm. Additionally, a total of twelve non-adhesive portions 16 are formed at the edge portions of the separators 11, 13, and the widthwise length of each of the non-adhesive portions 16 is 3 mm. Additionally, none of the twelve non-adhesive portions 16 are pressed by the attachment tape 17.

Referring to FIG. 4, lithium-ion precipitation of 10,070 mm² was observed in the electrode assembly of Comparative Example 1, and lithium-ion precipitation of 10,419 mm² was observed in the electrode assembly of Comparative Example 2. Additionally, lithium-ion precipitation of 8,122 mm² was observed in the electrode assembly of Comparative Example 3. On the other hand, lithium-ion precipitation of 6,233 mm² was observed in the electrode assembly 10 of Embodiment.

That is, the electrode assembly 10 according to Embodiment includes separators 11, 13 having a long side length of 545 mm and a short side length of 108.5 mm, and the thickness of the non-adhesive portion 16 of the separators 11, 13 is 2.2 mm thinner than the thickness of the adhesive portion 15, so that a significantly smaller amount of lithium-ion precipitation was observed compared to Comparative Examples 1 to 3, and thus it can be seen that the electrolyte wetting property of the first electrode 12 provided between the separators 11, 13 is superior.

### Apparatus for manufacturing electrode assembly

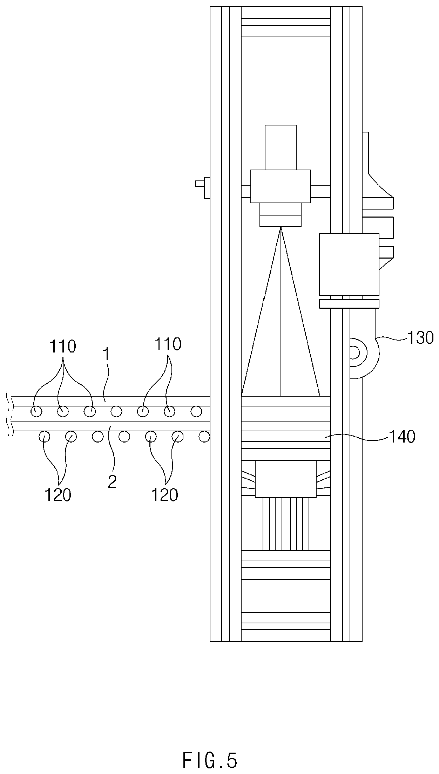

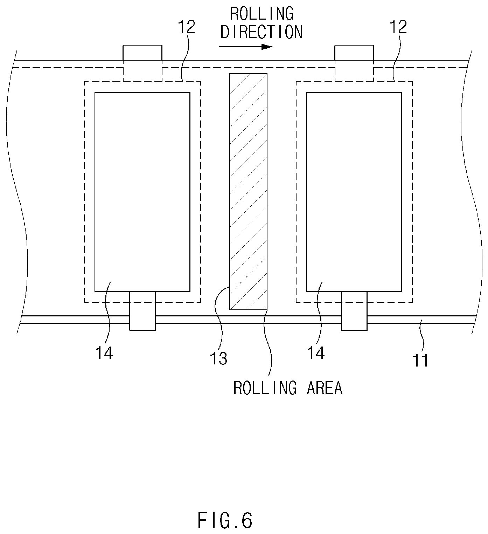

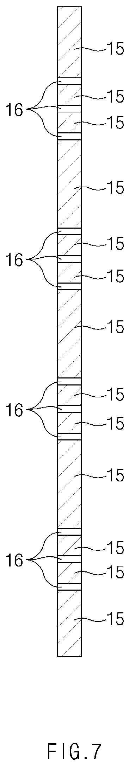

FIG. 5 is a view schematically illustrating an apparatus for manufacturing an electrode assembly according to an embodiment of the present disclosure. FIG. 6 is a view for describing that an adhesive unit rolls to bond the first separator and the second separator. FIG. 7 is a view for describing that non-adhesive portions and adhesive portions are formed on some of the first separator and the second separator as the adhesive unit rolls.

Referring to FIGS. 5 to 7, an apparatus for manufacturing an electrode assembly 100 according to the present disclosure may include a first supply unit 110 that supplies a first material 1 including a first separator 11 in a sheet shape extending in one direction and a plurality of first electrodes 12 seated on one surface of the first separator 11 and spaced apart at a predetermined interval along the length direction of the first separator 11, to an adhesive stage 140 where an adhesive process is performed; a second supply unit 120 that supplies a second material 2 including a second separator 13 in a sheet shape extending in one direction and a plurality of second electrodes 14 seated on one surface of the second separator 13 and spaced apart at a predetermined interval along the length direction of the second separator 13, to the adhesive stage 140; an adhesive unit 130 provided on the adhesive stage 140 and bonding a portion of the mutually facing parts of the first separator 11 and the second separator 13 to form an adhesive portion 15 on the first separator 11 and the second separator 13; a cutting unit that cuts the first separator 11 and the second separator 13 along the center line of the adhesive portion 15 to form a laminate in which the first separator 11, the first electrode 12, the second separator 13, and the second electrode 14 are sequentially laminated; and a taping unit that attaches a plurality of tapes 17 to the laminate so that the first separator 11, the first electrode 12, the second separator 13, and the second electrode 14 constituting the laminate are combined.

At this time, the taping unit may attach the plurality of tapes 17 to the laminate so that the non-adhesive portions 16 of the first separator 11 and the second separator 13 that are not bonded to each other and the plurality of tapes 17 do not overlap.

In the case of the electrode assembly 10 manufactured by the apparatus for manufacturing an electrode assembly 100 according to the present disclosure, since only a portion of the widthwise edges of the first and second separators 11, 13 are bonded to each other, non-adhesive portions 16 that are not bonded to each other may be formed at the widthwise edges of the first and second separators 11, 13. Such non-adhesive portions 16 do not overlap the attachment tape 17, and thus the electrolyte may flow into the first electrode 12 through the free volume between the non-adhesive portions 16. Therefore, in case of the electrode assembly 10 according to the present disclosure, there is an advantageous effect that the electrolyte wetting property of the electrode 12 interposed between the first and second separators 11, 13 is not impaired.

The first supply unit 110 supplies a first material 1 including a first separator 11 in a sheet shape extending in one direction and a plurality of first electrodes 12 seated on one surface of the first separator 11 and spaced apart at a predetermined interval along the length direction of the first separator 11, to the adhesive stage 140, and may be configured in various ways. For example, the first supply unit 110 may be a plurality of transfer rollers that supply the first material 1 to the adhesive stage 140.

The second supply unit 120 supplies a second material 2 including a second separator 13 in a sheet shape extending in one direction and a plurality of second electrodes 14 seated on one surface of the second separator 13 and spaced apart at a predetermined interval along the length direction of the second separator 13, to the adhesive stage 140, and may be configured in various ways. For example, the second supply unit 120 may be a plurality of transfer rollers that supply the second material 2 to the adhesive stage 140.

Meanwhile, the second supply unit 120 may supply the second material 2 to the upper side of the first material 1 so that the first material 1 and second material 2 described above overlap each other in the adhesive stage 140. For example, the second supply unit 120 may be a plurality of transfer rollers, and these plurality of transfer rollers may be provided on the upper side of the first supply unit 110.

The adhesive stage 140 is a stage where an adhesive process is performed to bond a portion of the mutually facing parts of the first separator 11 included in the first material 1 and the second separator 13 included in the second material 2, and may be configured in various ways. For example, the adhesive stage 140 may be in the shape of a flat plate, and an adhesive unit 130 may be provided on the upper part of the adhesive stage 140 to press a portion of the mutually facing parts of the first separator 11 and the second separator 13 to bond them.

The adhesive unit 130 bonds a portion of the mutually facing parts of the first separator 11 and the second separator 13 to form an adhesive portion 15 on the first separator 11 and the second separator 13, and may be a unit that applies heat and pressure to a portion of the mutually facing parts of the first separator 11 and the second separator 13 to form an adhesive portion 15 where they are thermally fused.

The adhesive unit 130 is a roller in which protrusions are formed, and may form an adhesive portion 15 in a portion of the rolling area illustrated in FIG. 6. While the adhesive unit 130 is rolling, a portion of the rolling area that is pressed by the protrusions formed on the adhesive unit 130 may be thermally fused to form the adhesive portion 15. Since the protrusions are spaced apart at predetermined intervals, a portion that is not pressed by the protrusions is not thermally fused and remains in a non-adhesive state, and thus the corresponding portion may be a non-adhesive portion 16.

FIG. 7 illustrates a state after the adhesive unit 130 rolls in the rolling area. A plurality of adhesive portions 15 and a plurality of non-adhesive portions 16 may be formed in the rolling area, which is a portion of the mutually facing parts of the first separator 11 and the second separator 13.

The cutting unit (not shown) cuts the first separator 11 and the second separator 13 along the center line of the adhesive portion 15 to form a laminate in which the first separator 11, the first electrode 12, the second separator 13, and the second electrode 14 are sequentially laminated, and may be formed in various ways. For example, the cutting unit may be a laser cutter or a conventional cutting unit composed of an upper blade and a lower blade.

The taping unit (not shown) attaches a plurality of tapes 17 to the laminate so that the first separator 11, the first electrode 12, the second separator 13, and the second electrode 14 constituting the laminate are coupled, and may be formed in various ways. For example, the taping unit may be a conventional tape attaching unit that attaches the tape 17 along the widthwise perimeter of the laminate while fixing the laminate in which the first separator 11 and the second separator 12 are folded to one side.

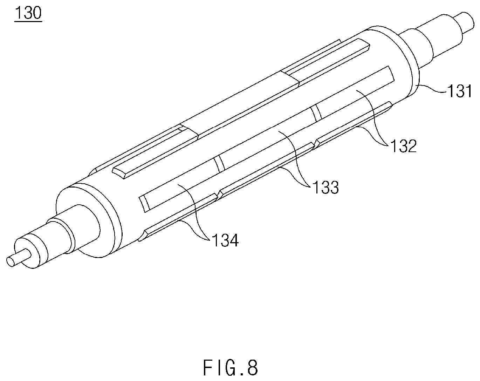

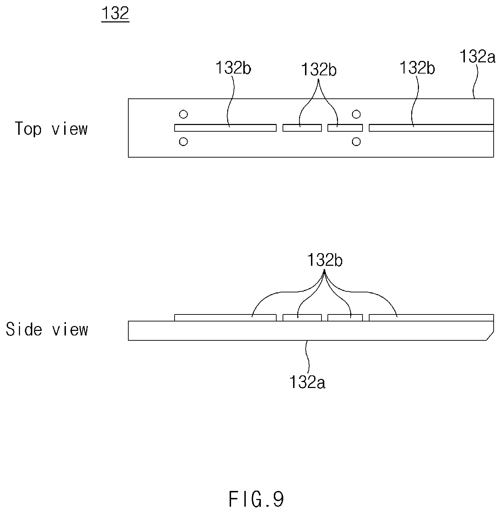

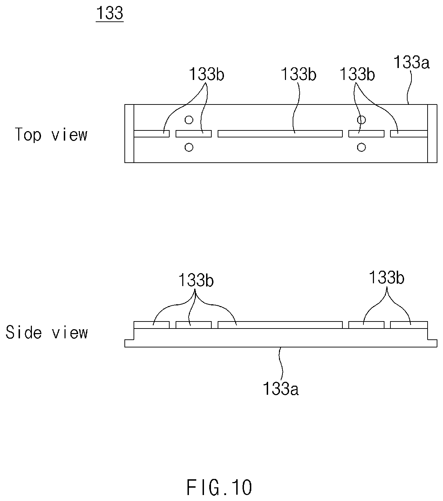

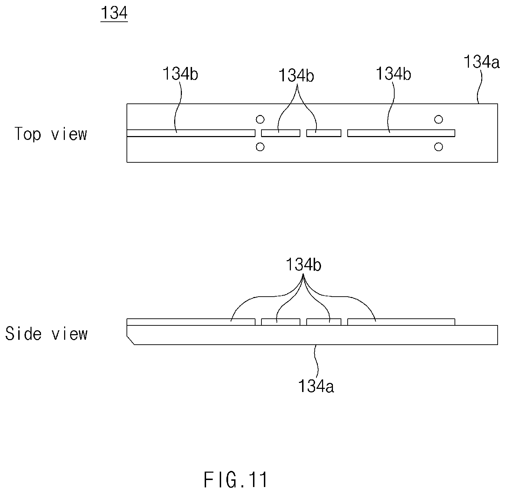

Meanwhile, FIG. 8 is a perspective view of an adhesive unit. FIG. 9 is a view for describing the structure of the first protrusion of the adhesive unit. FIG. 10 is a view for describing the structure of the second protrusion of the adhesive unit. FIG. 11 is a view for describing the structure of the third protrusion of the adhesive unit.

Referring to FIGS. 8 to 11, the adhesive unit 130 may include a cylindrical body 131 that rotates by a motor; and a plurality of protrusions that protrude from the surface of the body 131 and are spaced apart along the circumferential direction of the body 131.

The body 131 is connected to a rotor of the motor and rotates together when the rotor rotates, and a plurality of protrusions spaced apart along the circumferential direction of the body 131 may be formed on the surface of the body 131. These protrusions may be provided in various numbers on the body 131. For example, six groups of protrusions may be formed on the surface of the body 131, and each group of protrusions may be spaced apart from each other at equal intervals.

The protrusions of each group may include a first protrusion 132 provided on one side of the body 131 in the length direction; a second protrusion 133 spaced apart from the first protrusion 132 at a predetermined interval in the length direction of the body 131; and a third protrusion 134 spaced apart from the second protrusion 133 at a predetermined interval in the length direction of the body 131. That is, six groups of protrusions are formed on the surface of the body 131, and the protrusions of each group may be composed of first to third protrusions 132, 133, 134.

Meanwhile, each of the first protrusion 132 to the third protrusion 134 may include coupling plates 132a, 133a, 134a coupled to the body 131; and a plurality of protruding tips 132b, 133b, 134b that protrude from the coupling plates 132a, 133a, 134a and are spaced apart at a predetermined interval along the length direction of the body 131.

Specifically, the first protrusion 132 may include a first coupling plate 132a coupled to the body 131; and a plurality of first protruding tips 132b that protrude from the first coupling plate 132a and are spaced apart at a predetermined interval along the length direction of the body 131. At this time, the plurality of first protruding tips 132b may be configured to bond the first separator 11 and the second separator 13 by pressing the rolling area when the adhesive unit 130 rolls in the rolling area.

Additionally, an empty space is formed between the plurality of first protruding tips 132b, and this portion does not press the rolling area, so that a portion where the empty spaces formed between the plurality of first protruding tips 132b of the first separator 11 and the second separator 13 pass may form a non-adhesive portion 16.

Various numbers of first protruding tips 132b may be formed on the first coupling plate 132a. For example, four first protruding tips 132b may be formed on the first coupling plate 132a, and the intervals between the first protruding tips 132b may all be the same. The intervals between the first protruding tips 132b may all be between 2.5 mm and 3.5 mm, and in particular, the intervals between the first protruding tips 132b may all be 3 mm. In this case, the widthwise length of each non-adhesive portion 16 may be 3 mm.

The second protrusion 133 may include a second coupling plate 133a coupled to the body 131; and a plurality of second protruding tips 133b that protrude from the second coupling plate 133a and are spaced apart at a predetermined interval along the length direction of the body 131. At this time, the plurality of second protruding tips 133b may be configured to bond the first separator 11 and the second separator 13 by pressing the rolling area when the adhesive unit 130 rolls in the rolling area.

Additionally, an empty space is formed between the plurality of second protruding tips 133b, and this portion does not press the rolling area, so that a portion where the empty spaces formed between the plurality of second protruding tips 133b of the first separator 11 and the second separator 13 pass may form a non-adhesive portion 16.

Various numbers of second protruding tips 133b may be formed on the second coupling plate 133a. For example, five second protruding tips 133b may be formed on the second coupling plate 133a, and the intervals between the second protruding tips 133b may all be the same. The intervals between the second protruding tips 133b may all be between 2.5 mm and 3.5 mm, and in particular, the intervals between the second protruding tips 133b may all be 3 mm. In this case, the widthwise length of each non-adhesive portion 16 may be 3 mm.

The third protrusion 134 may include a third coupling plate 134a coupled to the body 131; and a plurality of third protruding tips 134b that protrude from the third coupling plate 134a and are spaced apart at a predetermined interval along the length direction of the body 131. At this time, the plurality of third protruding tips 134b may be configured to bond the first separator 11 and the second separator 13 by pressing the rolling area when the adhesive unit 130 rolls in the rolling area.

Additionally, an empty space is formed between the plurality of third protruding tips 134b, and this portion does not press the rolling area, so that a portion where the empty spaces formed between the plurality of third protruding tips 134b of the first separator 11 and the second separator 13 pass may form a non-adhesive portion 16.

Various numbers of third protruding tips 134b may be formed on the third coupling plate 134a. For example, four third protruding tips 134b may be formed on the third coupling plate 134a, and the intervals between the third protruding tips 134b may all be the same. The intervals between the third protruding tips 134b may all be between 2.5 mm and 3.5 mm, and in particular, the intervals between the third protruding tips 134b may all be 3 mm. In this case, the widthwise length of each non-adhesive portion 16 may be 3 mm.

Meanwhile, the first to third protruding tips 132b, 133b, 134b may have various thicknesses. For example, the first to third protruding tips 132b, 133b, 134b have a thickness of 2.2 mm, and in this case, the thickness of the adhesive portions 15 that are pressed by the first to third protruding tips 132b, 133b, 134b and bonded to each other among the first separator 11 and the second separator 13 may be 2.2 mm thinner than the thickness of the non-adhesive portions 16 that are not pressed by the first to third protruding tips 132b, 133b, 134b.

The first protrusion 132, the second protrusion 133, and the third protrusion 134 may be spaced apart from each other, and the distance between the first protrusion 132 and the second protrusion 133 may be the same as the distance between the second protrusion 133 and the third protrusion 134. That is, the first to third protrusions 132, 133, 134 may be disposed at equal intervals along the length direction of the body 131.

In this case, an empty space may be formed between the first protrusion 132 and the second protrusion 133 and between the second protrusion 133 and the third protrusion 134. The corresponding portion does not press the rolling area, so that a portion where the empty spaces formed between the first protrusion 132 and the second protrusion 133 and between the second protrusion 133 and the third protrusion 134 pass may form a non-adhesive portion 16.

Additionally, the distance between the first protrusion 132 and the second protrusion 133 may be the same as the distance between the first protruding tips 132b. The corresponding distance may be the same as the distance between the second protruding tips 133b and the distance between the third protruding tips 134b. The distance between the first to third protrusions 132, 133, 134 may be 3 mm. In this case, the widthwise length of each non-adhesive portion 16 may be 3 mm.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

| | | | |
|---|---|---|---|
| 10: | Electrode assembly | 11: | First electrode |
| 12: | First separator | 13: | Second electrode |
| 14: | Second separator | 15: | Adhesive portion |
| 16: | Non-adhesive portion | 17: | Attachment tape |
| 100: | Apparatus for manufacturing electrode assembly | 110: | First supply unit |
| 120: | Second supply unit | 130: | Adhesive unit |
| 140: | Adhesive stage | | |

## Claims

1. An electrode assembly comprising:
a first separator; a first electrode having one surface in contact with the first separator; a second separator having one surface in contact with the other surface of the first electrode; a second electrode having a different polarity from the first electrode and having one surface in contact with the other surface of the second separator; and
a plurality of attachment tapes attached to the first separator, the first electrode, the second separator, and the second electrode to combine them together,
wherein the first and second separators have wider widths than the first and second electrodes,
wherein widthwise edges of the first and second separators comprise adhesive portions that are bonded to each other and non-adhesive portions that are not bonded to each other, and
wherein the non-adhesive portions do not overlap the plurality of attachment tapes.

2. The electrode assembly according to claim 1,
wherein a plurality of non-adhesive portions are formed between portions where a pair of neighboring attachment tapes are attached among the widthwise edges of the first and second separators.

3. The electrode assembly according to claim 2,
wherein a distance between center lines of the pair of neighboring attachment tapes is 100 mm to 120 mm.

4. The electrode assembly according to claim 3,
wherein three non-adhesive portions are formed between the portions where the pair of neighboring attachment tapes are attached among the widthwise edges of the first and second separators.

5. The electrode assembly according to claim 3,
wherein each of the non-adhesive portions has a width of 2.5 mm to 3.5 mm.

6. The electrode assembly according to claim 1,
wherein the attachment tape comprises a film made of PET material with an adhesive layer formed on one surface.

7. An apparatus for manufacturing an electrode assembly, comprising:
a first supply unit that supplies a first material comprising a first separator in a sheet shape extending in one direction and a plurality of first electrodes seated on one surface of the first separator and spaced apart at a predetermined interval along the length direction of the first separator, to an adhesive stage where an adhesive process is performed;
a second supply unit that supplies a second material comprising a second separator in a sheet shape extending in one direction and a plurality of second electrodes seated on one surface of the second separator and spaced apart at a predetermined interval along the length direction of the second separator, to the adhesive stage;
an adhesive unit provided on the adhesive stage and bonding a portion of the mutually facing parts of the first separator and the second separator to form an adhesive portion on the first separator and the second separator;
a cutting unit that cuts the first separator and the second separator along a center line of the adhesive portion to form a laminate in which the first separator, the first electrode, the second separator, and the second electrode are sequentially laminated; and
a taping unit that attaches a plurality of tapes to the laminate so that the first separator, the first electrode, the second separator, and the second electrode constituting the laminate are combined,
wherein the taping unit attaches the plurality of tapes to the laminate so that the non-adhesive portions of the first separator and the second separator that are not bonded to each other and the plurality of tapes do not overlap.

8. The apparatus for manufacturing an electrode assembly according to claim 7,
wherein the second supply unit supplies the second material to an upper side of the first material so that the first material and the second material overlap each other in the adhesive stage.

9. The apparatus for manufacturing an electrode assembly according to claim 7,
wherein the adhesive unit comprises:
a cylindrical body that rotates by a motor; and
a plurality of protrusions that protrude from the surface of the body and are spaced apart along the circumferential direction of the body.

10. The apparatus for manufacturing an electrode assembly according to claim 9,
wherein the protrusions comprise:
a first protrusion provided on one side of the body in a length direction;
a second protrusion spaced apart from the first protrusion at a predetermined interval in the length direction of the body; and
a third protrusion spaced apart from the second protrusion at a predetermined interval in the length direction of the body.

11. The apparatus for manufacturing an electrode assembly according to claim 10,
wherein each of the first to third protrusions comprises:
a coupling plate coupled to the body; and
a plurality of protruding tips that protrude from the coupling plate and are spaced apart at a predetermined interval along the length direction of the body.

12. The apparatus for manufacturing an electrode assembly according to claim 11,
wherein a distance between the first protrusion and the second protrusion is the same as a distance between the second protrusion and the third protrusion.

13. The apparatus for manufacturing an electrode assembly according to claim 12,
wherein a distance between the first protrusion and the second protrusion is the same as a distance between neighboring protruding tips.
